# EUROPEAN PATENT APPLICATION

(11) **EP 1 975 020 A2**
(43) Date of publication of application: **01.10.2008**
(21) Application number: 08290283.4
(22) Date of filing: 26.03.2008
(51) Int. Cl.: B60S 1/04

(54) **Wiper apparatus**

(30) Priority: 28.03.2007 JP 2007083454
(71) Applicant: Mitsuba Corporation, Kiryu-shi, Gunma 376-8555 (JP)
(72) Inventor: Tajima, Tetsuya, Mitsuba Corporation, Kiryu-shi, Gunma 376-8555 (JP)
(74) Representative: Plaçais, Jean Yves

(57) **Abstract**

To provide a wiper apparatus capable of suppressing increase of a play of a push-in part to a panel, and reducing occurrence of noise due to a direct contact of the two members mutually. In order to satisfy the relation of A/B ≤ 0.4, where A is the distance of a perpendicular line from the axial center of an output shaft (28) to a line segment linking the axial centers of DR side (15a) and AS side (15b) pivot shafts, and B is the distance of a perpendicular line from the push-in part to the line segment, the axial center of output shaft (28) and the line segment linking the axial centers of the DR side (15a) and AS side (15b) pivot shafts are brought closer to each other.

## Description

### TECHNICAL FIELD OF THE INVENTION

The present invention relates to a wiper apparatus for wiping off a windshield provided in a vehicle by driving a pair of wiper arms.

### BACKGROUND OF THE INVENTION

Vehicles such as automobiles are provided with wiper arms having wiper blades for wiping off rain, snow and other deposits from the windshield. The wiper arm is designed to oscillate on the windshield by a wiper apparatus incorporated in the vehicle. The wiper apparatus includes a pivot shaft on which a wiper arm is fixed, and an electric motor for oscillating the pivot shaft, and by oscillating the pivot shaft by the electric motor, the wiper blade wipes the windshield.

The wiper apparatus provided with a pair of wiper arms of tandem type or opposite type has a pair of pivot shafts corresponding to the wiper arms, and each pivot shaft is driven by an electric motor by way of a link mechanism. As such wiper apparatus, the so-called frame integral type wiper apparatus (modular wiper apparatus) is known, in which a pair of pivot holders rotatably supporting the pivot shafts is fixed at both ends of a frame member of a pipe material, and the electric motor is fixed nearly in the central part of the frame member by way of a motor bracket, and they are assembled in one unit.

Such modular type wiper apparatus is disclosed, for example, Japanese Patent Application Laid-Open Publication No. 2000-289576 (patent document 1). In this wiper apparatus, a push-in part (support pin) is formed to project in a motor bracket (housing), and this push-in part is inserted into an insertion hole formed in a panel of the car body side through a grommet, and is positioned at a specified position of the vehicle. By fixing the pivot holders to the panel of the car body side by bolts, the wiper apparatus can be installed at the specified position of the vehicle.

### SUMMARY OF THE INVENTION

However, according to the wiper apparatus disclosed in patent document 1, the output shaft of the electric motor is disposed at a position relatively apart from the line segment linking the axial centers of the pivot shafts. Therefore, if the frictional force of the wiper blade on the windshield is strong, or if snow or other deposit is left over in the oscillating direction of wiper arm, when the wiper apparatus is driven, the reaction force of the electric motor acting on the motor bracket may cause the motor bracket to incline easily to the frame member.

When driving of the wiper apparatus is repeated in this state, due to repeated relative displacement of push-in part to the panel, the grommet placed between the push-in part and the panel may be worn out earlier, and a play between the push-in part and the panel may be increased, and the both members may directly contact with each other to cause noise, and moreover the generated noise may propagate in the car compartment, and ear troubles may be induced.

It is hence an object of the invention to provide a wiper apparatus capable of suppressing increase of the play between the push-in part and the panel, and reducing occurrence of noise due to direct contact of the two members.

A wiper apparatus according to the present invention is one with a first and second wiper arms and a first and second wiper blades attached to the each of the wiper arms for wiping off a windshield provided in a vehicle, the apparatus comprising: an electric motor having an output shaft, a crank arm fixed to the output shaft and a motor bracket with a push-in part to be inserted and fixed on the body of the vehicle; a first frame member having one end fixed to the motor bracket; a first pivot holder fixed to the other end of the first frame member; a first pivot shaft rotatably fitted to the first pivot holder; a first link plate having one end fixed to the first pivot shaft; a second frame member having one end fixed to the motor bracket; a second pivot holder fixed to the other end of the second frame member; a second pivot shaft rotatably fitted to the second pivot holder; a second link plate having one end fixed to the second pivot shaft; a link rod having both ends rotatably coupled to the other ends of the first and the second link plates respectively; and a drive link having one end rotatably coupled to the other end of the first or the second link plate, and the other end rotatably coupled to the other end of the crank arm, in which the relation of A/B ≤ 0.4 is satisfied where A is the distance of a perpendicular line from the axial center of the output shaft to a line segment linking the axial centers of the first and the second pivot shafts, and B is the distance of a perpendicular line from the push-in part to the line segment.

The wiper apparatus according to the present invention is one with a first and second wiper arms and a first and second wiper blades attached to the each of the wiper arms for wiping off a windshield provided in a vehicle, the apparatus comprising: an electric motor having an output shaft, a crank arm fixed to the output shaft; a motor bracket having a push-in part to be inserted and fixed on the body of the vehicle; a first frame member having one end fixed to the motor bracket; a first pivot holder fixed to the other end of the first frame member; a first pivot shaft rotatably fitted to the first pivot holder; a first link plate having one end fixed to the first pivot shaft; a second frame member having one end fixed to the motor bracket; a second pivot holder fixed to the other end of the second frame member; a second pivot shaft rotatably fitted to the second pivot holder; a second link plate having one end fixed to the second pivot shaft; a link rod having both ends rotatably coupled to the other ends of the first and the second link plates respectively; and a drive link having one end rotatably coupled to the other end of the first or the second link plate, and the other end rotatably coupled to the other end of the crank arm, in which the relation of A/B ≤ 0.4 is satisfied where A is the distance of a perpendicular line from the axial center of the output shaft to a line segment linking the axial centers of the first and the second pivot shafts, and B is the distance of a perpendicular line from the push-in part to the line segment.

The wiper apparatus according to the present invention is in which the relation of A/B ≤ 0.3 is satisfied.

The present invention is intended to satisfy the relation of A/B ≤ 0.4, where A is the distance of a perpendicular line from the axial center of the output shaft to a line segment linking the axial centers of the first and second pivot shafts, and B is the distance of a perpendicular line from the push-in part to the line segment, and therefore the axial center of the output shaft and the line segment linking the axial centers of the first and second pivot shafts may be set closer to each other. Accordingly, when driving the wiper apparatus, the inclination of the motor bracket to the frame members may be suppressed, and increase of the play of the push-in part on the panel can be suppressed, and occurrence of noise due to direct contact of the two members may be reduced. Preferably the relation of the distance A and the distance B is A/B ≤ 0.3, and increase of the play of the two members and occurrence of noise may be further suppressed.

### BRIEF DESCRIPTION OF THE DRAWINGS

FIG. 1 is an explanatory diagram showing a part of a vehicle provided with a wiper apparatus of the present invention.
FIG. 2 is a magnified front view of the wiper apparatus in FIG. 1.
FIG. 3 is an explanatory diagram of configuration of the positions of pivot shaft, output shaft, and push-in part.
FIG. 4 is an evaluation diagram of a plurality of examples differed in configuration in FIG. 3

### DESCRIPTION OF THE PREFERRED EMBODIMENTS

An embodiment of the present invention is specifically described below while referring to the accompanying drawings.

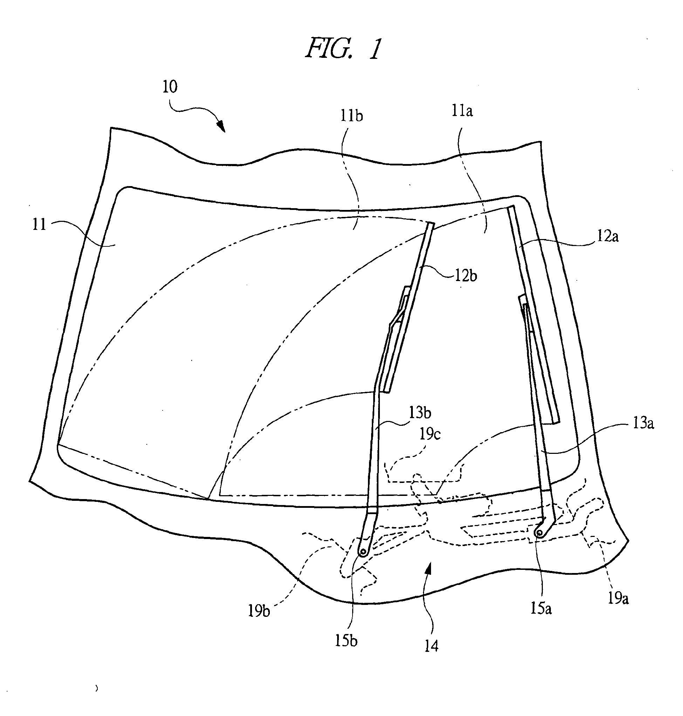

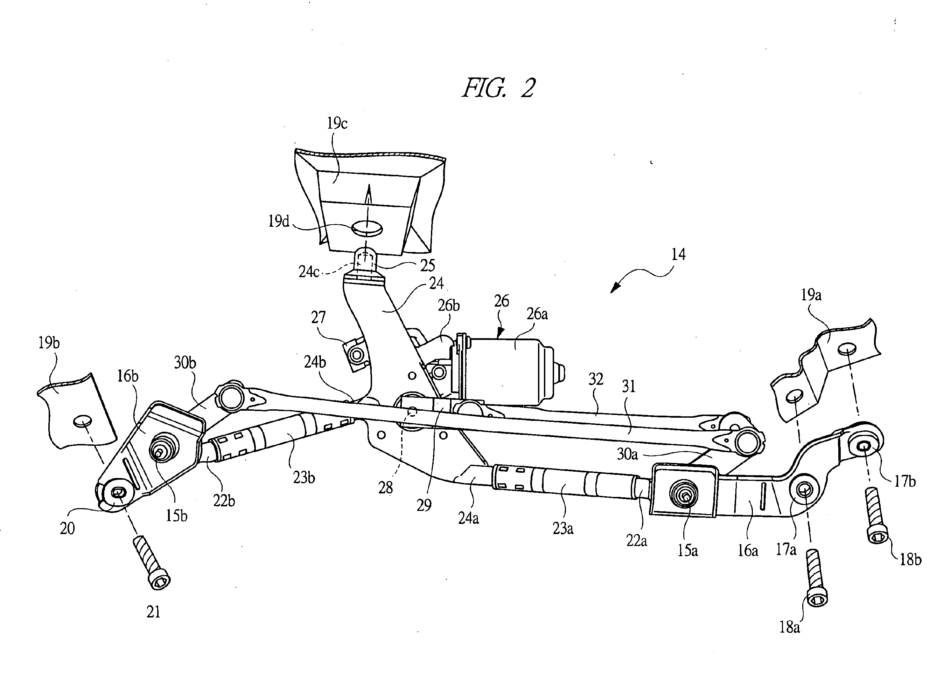

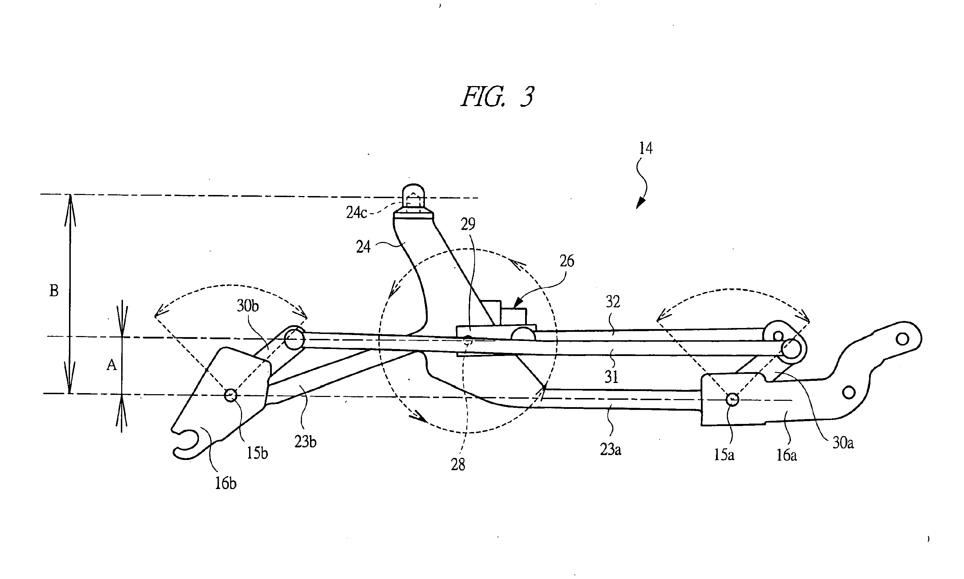

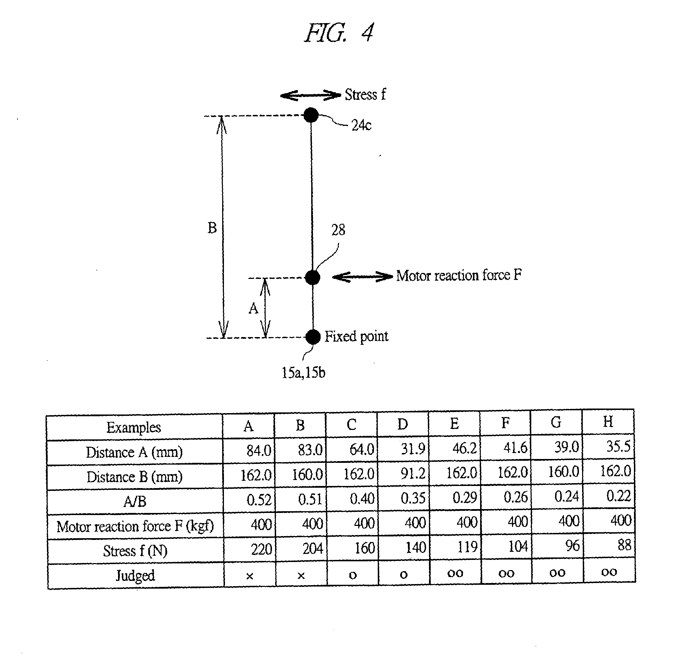

FIG. 1 is an explanatory diagram showing a part of a vehicle provided with a wiper apparatus of the present invention, FIG. 2 is a magnified front view of the wiper apparatus in FIG. 1, FIG. 3 is an explanatory diagram of configuration of the positions of pivot shaft, output shaft, and push-in part, and FIG. 4 is an evaluation diagram of a plurality of examples differed in configuration in FIG. 3.

As shown in FIG. 1, a vehicle 10 is provided with a front glass 11 as a windshield. Further, the vehicle 10 is provided with a driver's seat side (DR side) wiper blade 12a and an assistant's seat side (AS side) wiper blade 12b for wiping the front glass 11. The DR side wiper blade 12a is attached to the leading end of a DR side wiper arm 13a, and the AS side wiper blade 12b is attached to the leading end of an AS side wiper arm 13b. The wiper blades 12a, 12b are disposed to contact elastically with the front glass 11 by means of coil springs or the like not shown provided in the wiper arms 13a, 13b.

The wiper blades 12a, 12b are designed to make wiping motions by oscillating with DR side and AS side wiping ranges 11a, 11b directed in the same direction, between the upper inverted position and lower inverted position on the front glass 11. That is, the wiping pattern of the wiper blades 12a, 12b is of tandem type.

The vehicle 10 is provided with a modular type wiper apparatus 14 for driving the wiper arms 13a, 13b to making wiping motions. The wiper apparatus 14 is provided with a DR side pivot shaft (first pivot shaft) 15a to which the DR side wiper arm 13a is fixed, and an AS side pivot shaft (second pivot shaft) 15b to which the AS side wiper arm 13b is fixed.

As shown in FIG. 2, the DR side pivot shaft 15a is rotatably mounted on a DR side pivot holder (first pivot holder) 16a, and the AS side pivot shaft 15b is rotatably mounted on an AS side pivot holder (second pivot holder) 16b.

The DR side pivot holder 16a is bent and formed like a crank at the right side in the drawing, and a pair of rubber-made bushes 17a, 17b are fitted in the bent part. The DR side pivot holder 16a is fixed to a panel 19a inside an engine room or the like (not shown) of the vehicle 10 by means of mounting bolts 18a, 18b inserted in the bushes 17a, 17b.

The AS side pivot holder 16b is bent and formed like a crank at the left side in the drawing, and a rubber-made bush 20 is fitted in the bent part. The AS side pivot holder 16b is fixed to a panel 19b inside an engine room or the like (not shown) of the vehicle 10 by means of a mounting bolt 21 inserted in the bush 20.

In the DR side pivot holder 16a, a protrusion 22a is formed integrally so as to project to the left side in the drawing, and the other end of a first hollow pipe (first frame member) 23a is crimped and fixed to this protrusion 22a. In the AS side pivot holder 16b, a protrusion 22b is formed integrally so as to project to the right side in the drawing, and the other end of a second hollow pipe (second frame member) 23b is crimped and fixed to the protrusion 22b.

Between the first hollow pipe 23a and the second hollow pipe 23b, a motor bracket 24 is provided, and a first protrusion 24a and a second protrusion 24b are integrally formed on the motor bracket 24. The first protrusion 24a is fitted to one end of the first hollow pipe 23a, and the second protrusion 24b is fitted to one end of the second hollow pipe 23b, and by crimping the hollow pipes 23a, 23b, the motor bracket 24 is fixed on the hollow pipes 23a, 23b.

The hollow pipes 23a, 23b are set nearly in the same length, and therefore the motor bracket 24 is disposed nearly in the center in the lateral direction in the drawing between the pivot holders 16a and 16b.

At the upper side in the drawing of the motor bracket 24, a push-in part 24c of nearly columnar form is inserted and fixed in an insertion hole 19d formed in a panel 19c inside an engine room or the like (not shown) of the vehicle 10, and is formed integrally. This push-in part 24c is provided with a rubber-made grommet 25 for absorbing the play against the insertion hole 19d.

Herein, when installing the wiper apparatus 14 in the vehicle 10, first, as indicated by double-dot chain line arrow in the drawing, the push-in part 24c is inserted into the insertion hole 19d, and is positioned (fixed temporarily), and then by tightening the mounting bolts 18a, 18b, 21, the pivot holders 16a, 16b may be fixed to the panels 19a, 19b.

The motor bracket 24 is provided with an electric motor 26 for driving and oscillating the pivot shafts 15a, 15b. The electric motor 26 includes a motor unit 26a and a reduction gear mechanism 26b, and the motor unit 26a is driven by a supply current from a controller (not shown) connected to a coupler 27.

The output of the motor unit 26a is input into the reduction gear mechanism 26b, and is reduced to a specified rotating speed by the reduction gear mechanism 26b. One end of a crank arm 29 is fixed to an output shaft 28 of a reduction gear mechanism 26b, and the crank arm 29 rotates about the output shaft 28 as the electric motor 26 is driven.

In the pivot shafts 15a, 15b, one end of each of a first link plate 30a and a second link plate 30b is fixed, and at the other ends the link plates 30a, 30b, both ends of link rod 31 of pipe form are rotatably coupled by means of ball joints or the like (not shown).

Between the other end of first link plate 30a and the other end of crank arm 29, both ends of drive rod (drive link) 32 of pipe form are rotatably coupled by means of ball joints or the like (not shown). However, not limited between the other end of the first link plate 30a and the other end of the crank arm 29, the drive rod 32 may be also disposed between the other end of the second link plate 30b and the other end of the crank arm 29. In short, as far as the torque of the electric motor 26 can be transmitted to the wiper arms 13a, 13b, the coupling structure of the link rod 31 and the drive rod 32 is not particularly specified.

By forming the link mechanism in this configuration, as indicated by the broken line arrow in FIG. 3, the rotary motion of the crank arm 29 by driving of the electric motor 26 is converted into an oscillating motion by the drive rod 32, the link rod 31, and the link plates 30a, 30b, so that the pivot shafts 15a, 15b may be put in oscillating motion.

As shown in FIG. 3, the wiper apparatus 14 is designed to satisfy the relation of A/B ≤ 0.4, where A is the distance of a perpendicular line from the axial center of the output shaft 28 of the drive motor 26 to a line segment (virtual line) linking the axial centers of the pivot shafts 15a, 15b, and B is the distance of a perpendicular line of a line segment linking from the push-in part 24c of the motor bracket 24 to the axial centers of the pivot shafts 15a, 15b.

As a result, the distance between the axial center of the output shaft 28 and the line segment linking the axial centers of the pivot shafts 15a, 15b is closer than before, and when the electric motor 26 is driven, by the reaction force of the electric motor 26 acting on the motor bracket 24, that is, by the load transmitted from the link plates 30a, 30b by way of the link rod 31 and the drive rod 32, the inclination of the motor bracket 24 to the hollow pipes 23a, 23b may be suppressed.

FIG. 4 shows the results of measurement of stress f (N), by setting the length of the distances A, B (mm) at arbitrary values, in which a certain point on a line segment linking the axial centers of the pivot shafts 15a, 15b is a fixed point, the axial center of the output shaft 28 is an action point of application of motor reaction force F, and the push-in part 24c is a play initiating point of causing a play due to stress f. Herein, the motor reaction force F is set according to the output characteristic (maximum value) of the electric motor used in a general wiper apparatus, and is specifically set at 400 kgf.

As shown in FIG. 4, in the example A and the example B, the values of A/B were "0.52" and "0.51", respectively, and at this time the value of stress f was a large value exceeding 200 N in both cases. In the example C and the example D, the values of A/B were "0.40" and "0.35", respectively (A/B ≤ 0.4), and at this time the value of stress f was less than 200 N in both cases. In the example E to the example H, the values of A/B were "0.29", "0.26", "0.24", and "0.22", respectively (A/B ≤ 0.3), and at this time the value of stress f was small, about 100 N in all cases.

Among the example A to the example H, especially in the example A and the example B, the inclination of the motor bracket 24 to the hollow pipes 23a, 23b could not be suppressed enough, and same as in the prior art, the play was increased between the push-in part 24c and the insertion hole 19d, and there was a fear of occurrence of abnormal noise caused by direct contact of two members in an early stage. Hence, the example A and the example B were found to be not applicable (judged "×").

In the example C and the example D, as compared with the example A and the example B, the inclination of the motor bracket 24 to the hollow pipes 23a, 23b could be suppressed sufficiently and the play could be decreased between the push-in part 24c and the insertion hole 19d. Therefore, the rigidity of the motor bracket 24 may be generally decreased, and the size and weight may be reduced, and the wiper apparatus may be highly realistic (judged "o").

Among the example E and the example H, as compared with the example C and the example D, the inclination of the motor bracket 24 to the hollow pipes 23a, 23b could be further suppressed. Therefore, the motor bracket 24 may be further reduced in size and weight, and the wiper apparatus 14 may be much highly realistic (judged "oo").

According to the wiper apparatus 14 of the embodiment having such configuration, since the relation of A/B ≤ 0.4 is satisfied, where A is the distance of a perpendicular line from the axial center of the output shaft 28 to a line segment linking the axial centers of the DR side and AS side pivot shafts 15a, 15b, and B is the distance of a perpendicular line from the push-in part 24c to the line segment (judged "o" and "oo"), and therefore the axial center of the output shaft 28 may be set closer to the line segments linking the axial centers of the DR side and AS side pivot shafts 15a, 15b.

Therefore, when driving the wiper apparatus 14, the inclination of the motor bracket 24 to the hollow pipes 23a, 23b can be suppressed, and the increase of the play between the push-in part 24c and the insertion hole 19d can be suppressed, so that the occurrence of unusual noise due to direct contact of the two members could be reduced. Preferably, the relation of the distance A and the distance B may be defined to satisfy the relation of A/B ≤ 0.3 (judged "oo"), and in this case the increase of the play between the push-in part 24c and the insertion hole 19d can be further suppressed, and the occurrence of noise may be much more suppressed.

The present invention is not limited to the above-mentioned embodiments, and may be modified in various forms freely without departing from the scope and spirit of the invention. For example, in the above-mentioned embodiment, the wiping pattern of the wiper apparatus 14 is explained as tandem type, but the invention is not limited to this example, but may be applied in the wiper apparatus of the other wiping patterns such as wipe-off type.

In the above-mentioned embodiment, the wiper apparatus 14 is applied in an automobile, but the invention is not limited to this example, but may be applied in the wiper apparatus used in railway vehicle, aircraft, construction machinery, or the like.

## Claims

1. A wiper apparatus with a first and second wiper arms and a first and second wiper blades attached to the each of the wiper arms for wiping off a windshield provided in a vehicle, the apparatus comprising:
an electric motor having an output shaft, a crank arm fixed to the output shaft and a motor bracket with a push-in part to be inserted and fixed on the body of the vehicle;
a first frame member having one end fixed to the motor bracket;
a first pivot holder fixed to the other end of the first frame member;
a first pivot shaft rotatably fitted to the first pivot holder;
a first link plate having one end fixed to the first pivot shaft;
a second frame member having one end fixed to the motor bracket;
a second pivot holder fixed to the other end of the second frame member;
a second pivot shaft rotatably fitted to the second pivot holder;
a second link plate having one end fixed to the second pivot shaft;
a link rod having both ends rotatably coupled to the other ends of the first and the second link plates respectively; and
a drive link having one end rotatably coupled to the other end of the first or the second link plate, and the other end rotatably coupled to the other end of the crank arm,
wherein the relation of A/B ≤ 0.4 is satisfied where A is the distance of a perpendicular line from the axial center of the output shaft to a line segment linking the axial centers of the first and the second pivot shafts, and B is the distance of a perpendicular line from the push-in part to the line segment.

2. A wiper apparatus with a first and second wiper arms and a first and second wiper blades attached to the each of the wiper arms for wiping off a windshield provided in a vehicle, the apparatus comprising:
an electric motor having an output shaft, a crank arm fixed to the output shaft;
a motor bracket having a push-in part to be inserted and fixed on the body of the vehicle;
a first frame member having one end fixed to the motor bracket;
a first pivot holder fixed to the other end of the first frame member;
a first pivot shaft rotatably fitted to the first pivot holder;
a first link plate having one end fixed to the first pivot shaft;
a second frame member having one end fixed to the motor bracket;
a second pivot holder fixed to the other end of the second frame member;
a second pivot shaft rotatably fitted to the second pivot holder;
a second link plate having one end fixed to the second pivot shaft;
a link rod having both ends rotatably coupled to the other ends of the first and the second link plates respectively; and
a drive link having one end rotatably coupled to the other end of the first or the second link plate, and the other end rotatably coupled to the other end of the crank arm,
wherein the relation of A/B ≤ 0.4 is satisfied where A is the distance of a perpendicular line from the axial center of the output shaft to a line segment linking the axial centers of the first and the second pivot shafts, and B is the distance of a perpendicular line from the push-in part to the line segment.

3. The wiper apparatus according to claim 1 or 2, wherein the relation of A/B ≤ 0.3 is satisfied.
